# EUROPEAN PATENT APPLICATION

(11) **EP 4 152 183 A1**
(43) Date of publication of application: **22.03.2023**
(21) Application number: 20935628.6
(22) Date of filing: 14.05.2020
(51) Int. Cl.: G06F 21/32

(54) **AUTHENTICATION METHOD, AUTHENTICATION PROGRAM, AND AUTHENTICATION DEVICE**

(71) Applicant: FUJITSU LIMITED, Kawasaki-shi, Kanagawa 211-8588 (JP)
(72) Inventor: OSAMURA, Kazuki, Kawasaki-shi, Kanagawa 211-8588 (JP); MURASE, Taichi, Kawasaki-shi, Kanagawa 211-8588 (JP)
(74) Representative: Hoffmann Eitle
(86) International application number: PCT/JP2020/019328
(87) International publication number: WO 2021/229763

(57) **Abstract**

An authentication method causes a computer to execute processing including referring to a storage unit that stores biometric information of a person in association with feature information of a face image of the person when receiving first imaged data and second imaged data imaged by a first camera and specifying a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria; specifying one of the first biometric information group or the second biometric information group, based on a similarity between feature information of a face image included in third imaged data and each of the feature information of the first face image and the feature information of the second face image, when receiving the third imaged data imaged by a second camera; and executing authentication processing according to the plurality of pieces of biometric information included in the specified biometric information group and the acquired biometric information when acquiring biometric information detected by a sensor.

## Description

### FIELD

The present invention relates to an authentication technology.

### BACKGROUND

As one of authentication methods, one-to-N authentication for specifying a specific individual from among a large number of people using one type of biometric information has been known. While the one-to-N authentication does not need key input or card presentation for identification (ID), its accuracy is limited only with a single piece of biometric information modality.

From such a background, a multi-biometric authentication technology using a plurality of types of biometric information has been developed. Merely as an example, an authentication system using face authentication and vein authentication together has been proposed. For example, in the authentication system, a first imaging device installed in an entrance of a store images a face of a person who enters the entrance of the store. A part of vein authentication registered data is narrowed as an authentication candidate from vein authentication registered data of N users using the face image imaged by such a first imaging device. Collation in the vein authentication is performed on vein authentication registered data associated with a date and time when the face image is imaged in a past predetermined time period from a time point when a second imaging device installed in a counter in the store images a vein image, of the vein authentication registered data narrowed as the authentication candidate.

### CITATION LIST

### [PATENT DOCUMENT]

Patent Document 1: Japanese Laid-open Patent Publication No. 2019-128880

### SUMMARY

### [TECHNICAL PROBLEM]

However, the authentication system described above only narrows the unspecified number of authentication candidates in order of entry to a store, and there is a case where an authentication time increases.

In other words, the authentication system described above uses the vein authentication registered data associated with the date and time when the face image is imaged in the past predetermined time period for the collation in the vein authentication in order of entry to the store. However, the order of the entry to the store does not necessarily match the order of arrival at the counter. For example, in a case where a user who has entered the store last visits the counter first, vein authentication registered data narrowed as an authentication candidate at the time when a face image of another user who has entered the store before the last user who has entered the store is imaged is collated first. In this case, as a result of repeating the collation in the vein authentication before the vein authentication registered data narrowed as the authentication candidate last is collated, an authentication time increases.

In one aspect, an object of the present invention is to provide an authentication method, an authentication program, and an authentication device that can shorten an authentication time.

### [SOLUTION TO PROBLEM]

An authentication method according to one aspect causes a computer to execute processing including referring to a storage unit that stores biometric information of a person in association with feature information of a face image of the person when receiving first imaged data and second imaged data imaged by a first camera and specifying a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria; specifying one of the first biometric information group or the second biometric information group, based on a similarity between feature information of a third face image included in third imaged data and each of the feature information of the first face image and the feature information of the second face image, when receiving the third imaged data imaged by a second camera; and executing authentication processing according to the plurality of pieces of biometric information included in the specified biometric information group and the acquired biometric information when acquiring biometric information detected by a sensor.

According to an aspect of the embodiments, an authentication method executed by a computer, the authentication method includes referring to a storage unit that stores biometric information of a person in association with feature information of a face image of the person when the first specification unit receives first imaged data and second imaged data imaged by a first camera and to specify a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria; specifying one of the first biometric information group or the second biometric information group, based on a similarity between feature information of a third face image included in third imaged data and each of the feature information of the first face image and the feature information of the second face image, when the second specification unit receives the third imaged data imaged by a second camera; and executing authentication processing according to a plurality of pieces of biometric information included in the specified biometric information group and the acquired biometric information when the authentication unit acquires biometric information detected by a sensor.

### [ADVANTAGEOUS EFFECTS OF INVENTION]

It is possible to shorten an authentication time.

### BRIEF DESCRIPTION OF DRAWINGS

FIG. 1 is a block diagram illustrating an example of a functional configuration of each device included in an authentication system according to a first embodiment;
FIG. 2 is a diagram illustrating an example of narrowed list data;
FIG. 3 is a diagram illustrating an implementation example of a store-side system;
FIG. 4 is a diagram illustrating an example of the narrowed list data;
FIG. 5 is a diagram illustrating an example of a control sequence of first specification processing according to the first embodiment;
FIG. 6 is a diagram illustrating an example of a control sequence of second specification processing according to the first embodiment;
FIG. 7 is a diagram illustrating an example of a control sequence of first specification processing according to an application example;
FIG. 8 is a diagram illustrating an example of sorted narrowed list data; and
FIG. 9 is a diagram illustrating a hardware configuration example of a computer.

### DESCRIPTION OF EMBODIMENTS

Hereinafter, an authentication method, an authentication program, and an authentication device according to the present application will be described with reference to the accompanying drawings. Note that the embodiments do not limit the disclosed technology. Then, each of the embodiments may be appropriately combined within a range without causing contradiction between processing contents.

### [First Embodiment]

### [Example of System Configuration]

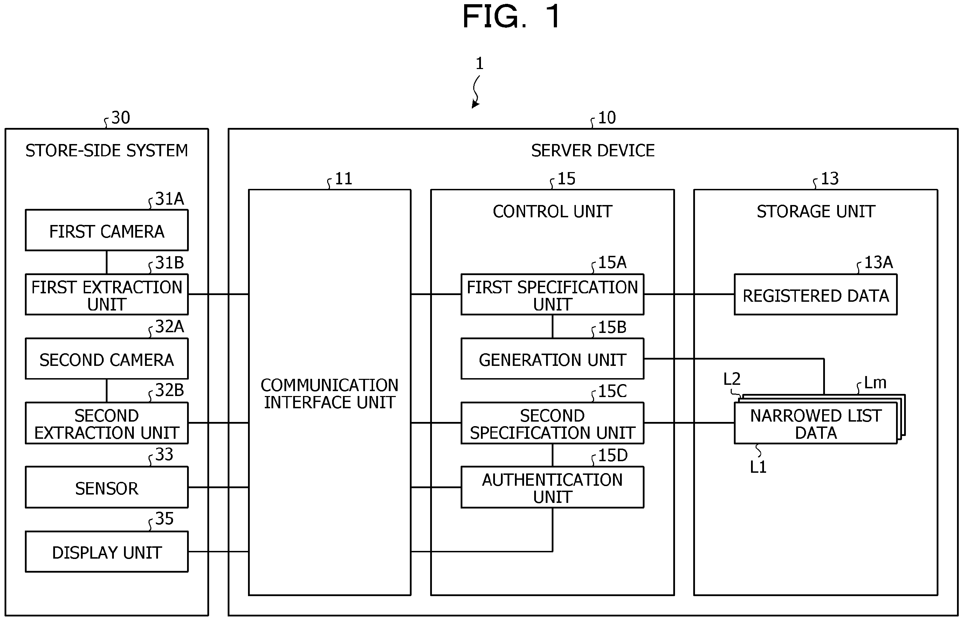

FIG. 1 is a block diagram illustrating an example of a functional configuration of each device included in an authentication system according to a first embodiment. Merely as one aspect, an authentication system 1 illustrated in FIG. 1 provides a multi-biometric authentication service that authenticates a person using a plurality of types of biometric information, from an aspect corresponding to a use case in which the number N of persons whose biometric information is registered is expanded to a scale of several millions or several tens of millions.

The authentication system 1 illustrated in FIG. 1 uses palm veins and face information as an example of the plurality of types of biometric information, from an aspect of eliminating need of key input or card presentation for an ID and realizing non-contact authentication. For example, the face information is used as a first modality used to narrow collation targets to be collated in personal authentication from the number N of registered persons, and the palm vein is used as a second modality used to authenticate the person from among the collation targets narrowed by the first modality. The "modality" here may correspond to a type of biometric information or a term such as a biometric identification site.

As an example of a use case of such an authentication system 1, an example is described in which a multi-biometric authentication service is applied to personal authentication at the time of empty-handed settlement of products to be purchased in a no-cash register store, an unmanned cash register, a self-checkout, or the like.

As illustrated in FIG. 1, the authentication system 1 may include a server device 10 and a store-side system 30 merely as an example. The server device 10 and the store-side system 30 may be connected to each other via an arbitrary network.

The server device 10 is an example of a computer that provides the multi-biometric authentication service described above. The server device 10 corresponds to an example of an authentication device. As an embodiment, the server device 10 can be implemented by installing an authentication program that realizes the multi-biometric authentication service described above into an arbitrary computer as package software or online software. For example, the server device 10 can be implemented as a server that provides functions related to the multi-biometric authentication service described above on-premise, for example, a Web server. Not limited to this, the multi-biometric authentication service described above may be provided as a cloud service by implementing the server device 10 as a software as a service (SaaS) application.

The store-side system 30 corresponds to an example of a component provided on a side of a store in the authentication system 1 illustrated in FIG. 1. For example, the store-side system 30 extracts biometric information of the first modality, for example, a face feature, from a face image in which a face of a person entering the store from an entrance of the store is imaged or extracts biometric information of the second modality, for example, a feature of palm veins from a vein image acquired at the counter of the store where payment is made.

### [One Aspect of Problem]

As described in the background art above, the related art described above only narrows the unspecified number of authentication candidates in the order of entry to the store, and there is a case where the authentication time increases.

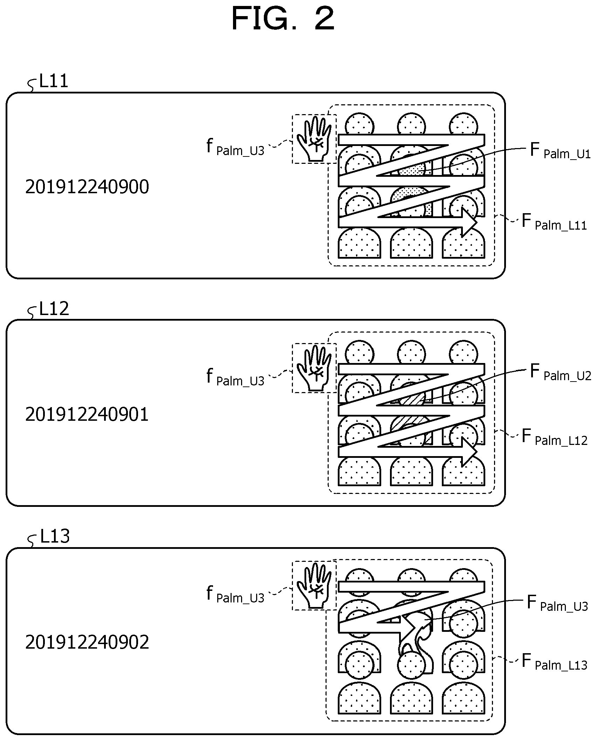

FIG. 2 is a diagram illustrating an example of narrowed list data. Merely as an example, in FIG. 2, three pieces of narrowed list data L11 to L13 generated using the related art are illustrated. For example, the narrowed list data L11 includes a list of a registered palm vein information group F_{Palm_L11} in which a face of a user U1 who enters a store is narrowed using a face image included in imaged data imaged at 9:00 on December 24, 2019. Furthermore, the narrowed list data L12 includes a list of a registered palm vein information group F_{Palm_L12} in which a face of a user U2 who enters the store is narrowed using a face image included in imaged data imaged at 9:01 on December 24, 2019. Moreover, the narrowed list data L13 includes a list of a registered palm vein information group F_{Palm_L13} in which a face of a user U3 who enters the store is narrowed using a face image included in imaged data imaged at 9:02 on December 24, 2019. Note that, in FIG. 2, an example is illustrated in which registered palm vein information associated with registered face information having a predetermined number of higher similarities with input face information acquired from a face image imaged at the time of entry to the store, for example, top nine similarities, among the registered palm vein information on which user registration has been performed, is narrowed.

In this way, in a case where the order of the entry to the store is order of the users U1, U2, and U3, input palm vein information acquired at the counter of the store is collated in order of the entry to the store, that is, order of the narrowed list data L11, L12, and L13.

Here, the order of the entry to the store does not necessarily match the order of the arrival at the counter. For example, a case may occur in which the user U3 who has entered the store last from among the users U1 to U3 visits the counter first. In this way, input palm vein information f_{Palm_U3} of the user U3 acquired at the counter of the store or the like is collated in the following order. In other words, as illustrated in FIG. 2, the registered palm vein information group F_{Palm_L11} of the narrowed list data L11, the registered palm vein information group F_{Palm_L12} of the narrowed list data L12, and the registered palm vein information group F_{Palm_L13} of the narrowed list data L13 are collated in this order. In this case, the narrowed list data L13 narrowed at the time when the face image of the user U3 is imaged is collated after the narrowed list data L11 and L12 that is narrowed at the time when face images of the users U1 and U2 who have entered the store before the user U3 are imaged.

In this way, as a result of the collation with the extra narrowed list data L11 and L12 before the collation with the registered palm vein information F_{Palm_U3} that matches the input palm vein information f_{Palm_U3} of the user U3 is performed, the authentication time increases. Such extra collation increases as the number of users who have entered the store before the user U3 increases, and in addition, may increase as the number of pieces of registered palm vein information narrowed using the face images increases.

### [One Aspect of Problem-Solving Approach]

Therefore, the multi-biometric authentication service according to the present embodiment adopts an approach for dividing narrowing using face information into two times. As merely one aspect, the multi-biometric authentication service according to the present embodiment uses a face image of the first modality imaged at the time of entry to the store to generate a narrowed list including a registered biometric information group of the second modality. As another aspect, the multi-biometric authentication service according to the present embodiment uses a face image of the first modality imaged at the time of payment to specify a narrowed list to be collated for personal authentication of the second modality from among the plurality of narrowed lists.

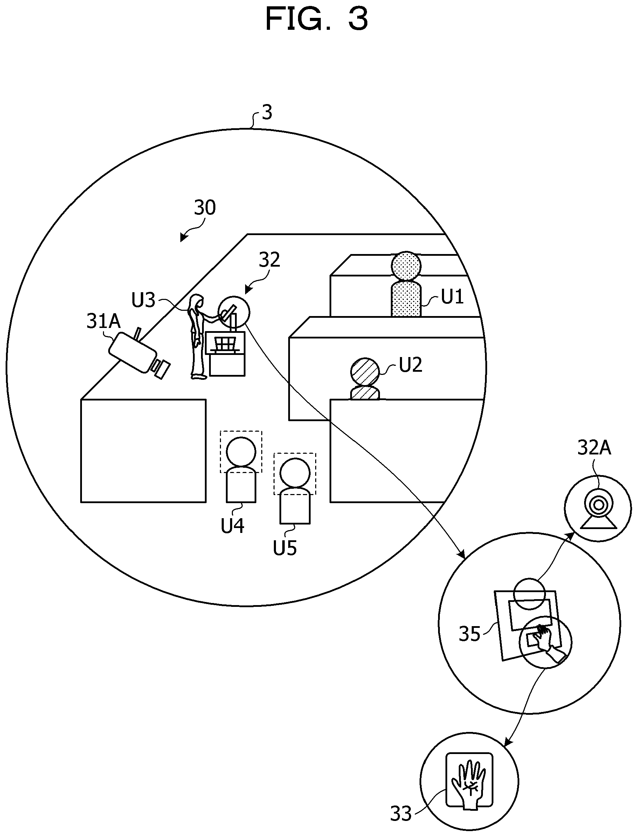

FIG. 3 is a diagram illustrating an implementation example of the store-side system 30. In FIG. 3, an example is illustrated in which the multi-biometric authentication service is applied to personal authentication at the time of payment for products to be purchased in a no-cash register store, an unmanned cash register, a self-checkout, or the like.

As illustrated in FIG. 3, the store-side system 30 may include a first camera 31A that is installed in a state where a face of a person who enters an entrance of a store 3 can be imaged. Moreover, the store-side system 30 may include a terminal 32 that is installed in a payment counter of the store 3. For example, the terminal 32 may be connected to a reading unit that reads product information, for example, a name, a price, or the like of a product from a tag, a barcode, or the like attached to the product as well as a display unit 35 that performs various displays such as a list of products to be purchased by a user of the store 3, a total price, or the like. Moreover, the store-side system 30 may include a second camera 32A that is installed in a state where a face of a person who is using the terminal 32 can be imaged. For example, the second camera 32A may be realized as an in-camera that is arranged to make a lens face in the same direction as a screen of the display unit 35. Moreover, the store-side system 30 may include a sensor 33 that detects palm veins of a person who uses the terminal 32.

With such a store-side system 30, as one aspect, the narrowed list described above is generated using face information extracted from a face image included in imaged data of the first camera 31A, for example, a face feature. Here, the face information extracted from the face image included in the imaged data of the first camera 31A has an aspect of being extracted at the time of the entry to the store 3, the face information may be described as "face information at the time of entry to the store" below. For example, the narrowed list is generated by listing the registered palm vein information associated with each piece of registered face information with a predetermined number of higher similarities with the face information at the time of entry to the store, among the registered palm vein information on which user registration has been performed. The registered palm vein information listed in this way can be associated with the face information at the time of entry to the store. For example, the face information at the time of entry to the store can be added to the narrowed list as a label used to identify the narrowed list. In addition, the face information at the time of entry to the store and the narrowed list can be associated via any identification information such as a date and time when imaged data is imaged.

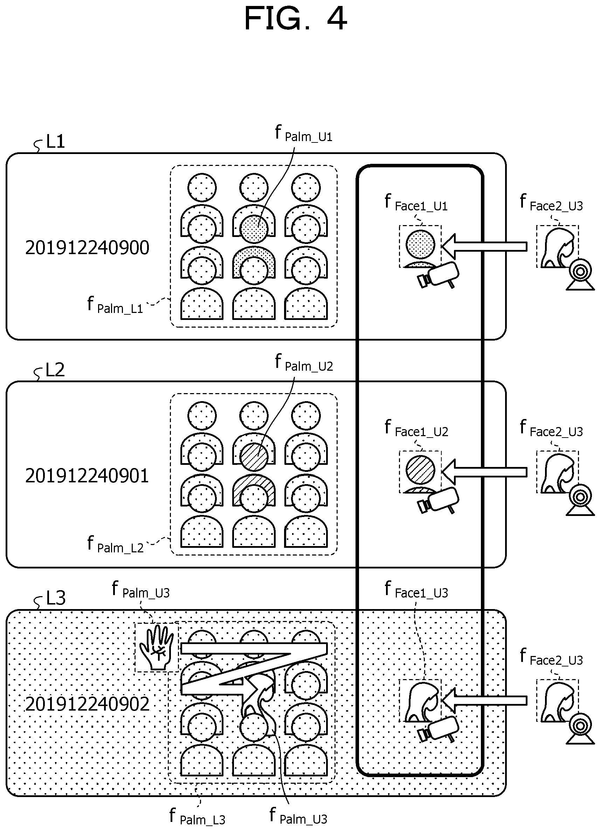

FIG. 4 is a diagram illustrating an example of the narrowed list data. Merely as an example, in FIG. 4, three pieces of narrowed list data L1 to L3 generated according to the multi-biometric authentication service according to the present embodiment are illustrated.

For example, face information at the time of entry to the store f_{face1_U1} of the user U1 is extracted from the face image of the user U1 included in the imaged data in which the face of the user U1 who enters the store 3 is imaged at 9:00 on December 24, 2019. The face information at the time of entry to the store f_{face1_U1} of the user U1 extracted in this way is added as a label, and the narrowed list data L1 is generated in which the registered palm vein information group F_{Palm_L1} narrowed using the face information at the time of entry to the store f_{face1_U1} is listed.

Furthermore, face information at the time of entry to the store f_{face1_U2} of the user U2 is extracted from the face image of the user U2 included in the imaged data in which the face of the user U2 who enters the store 3 is imaged at 9:01 on December 24, 2019. The face information at the time of entry to the store f_{face1_U2} of the user U2 extracted in this way is added as a label, and the narrowed list data L2 is generated in which the registered palm vein information group F_{Palm_L2} narrowed using the face information at the time of entry to the store f_{face1_U2} is listed.

Moreover, face information at the time of entry to the store f_{face1_U3} of the user U3 is extracted from the face image of the user U3 included in the imaged data in which the face of the user U3 who enters the store 3 is imaged at 9:02 on December 24, 2019. The face information at the time of entry to the store f_{face1_U3} of the user U3 extracted in this way is added as a label, and the narrowed list data L3 is generated in which the registered palm vein information group F_{Palm_L3} narrowed using the face information at the time of entry to the store f_{face1_U3} is listed.

As another aspect, by using face information extracted from a face image included in the imaged data of the second camera 32A, for example, a face feature, a narrowed list to be collated in vein authentication of the second modality is specified from among the plurality of narrowed lists. Here, the face information extracted from the face image included in the imaged data of the second camera 32A has an aspect of being extracted at the time of payment at the counter of the store 3, the face information may be referred to as "face information at the time of payment" below. For example, the face information at the time of payment is collated with the face information at the time of entry to the store that is included in each narrowed list. Merely as an example, among the narrowed lists, a narrowed list, to which the face information at the time of entry to the store of which a similarity with the face information at the time of payment exceeds a predetermined threshold is added as a label, is specified. As another example, among the narrowed lists, a narrowed list, to which the face information at the time of entry to the store of which the similarity with the face information at the time of payment is the maximum is added as a label, is specified.

For example, in a case where face information at the time of payment f_{face2_U3} of the user U3 is extracted from the imaged data of the second camera 32A, as illustrated in FIG. 4, the face information at the time of payment f_{face2_U3} is collated with the face information at the time of entry to the store f_{face1_U1} of the narrowed list data L1, the face information at the time of entry to the store f_{face1_U2} of the narrowed list data L2, and the face information at the time of entry to the store f_{face1_U3} of the narrowed list data L3 in the order of the entry to the store. At this time, a similarity between the face information at the time of payment f_{face2_U3} and the face information at the time of entry to the store f_{face1_U1} and a similarity between the face information at the time of payment f_{face2_U3} and the face information at the time of entry to the store f_{face1_U2} are smaller than a similarity between the face information at the time of payment f_{face2_U3} and the face information at the time of entry to the store f_{face1_U3} and do not exceed a threshold. On the other hand, the similarity between the face information at the time of payment f_{face2_U3} and the face information at the time of entry to the store f_{face1_U3} is the largest among the three similarities and exceeds the threshold. Therefore, the narrowed list data L3 to which the face information at the time of entry to the store f_{face1_U3} is added as a label is specified as a target to be collated in the vein authentication of the second modality, among the three pieces of narrowed list data L1 to L3. As a result, the input palm vein information detected from the sensor 33 is collated with the registered palm vein information group F_{Palm_L1} of the narrowed list data L3.

In this way, the multi-biometric authentication service according to the present embodiment can omit the collation with the extra narrowed list data L11 and narrowed list data L12 before collation with the registered palm vein information F_{Palm_U3} that matches the input palm vein information f_{Palm_U3} of the user U3 is performed. Specifically, the collation with the registered palm vein information group F_{Palm_L1} associated with the face information at the time of entry to the store f_{face1_U1} that is not similar to the face information at the time of payment f_{face2_U3} and the collation with the registered palm vein information group F_{Palm_L2} associated with the face information at the time of entry to the store f_{face1_U2} that is not similar to the face information at the time of payment f_{face2_U3} can be skipped.

Therefore, according to the multi-biometric authentication service according to the present embodiment, it is possible to reduce the authentication time.

### [Configuration of Store-side System 30]

Next, an example of a functional configuration of the store-side system 30 according to the present embodiment will be described. In FIG. 1, blocks corresponding to the functions of the multi-biometric authentication service described above are illustrated for each of the server device 10 and the store-side system 30. As illustrated in FIG. 1, the store-side system 30 includes the first camera 31A, a first extraction unit 31B, the second camera 32A, a second extraction unit 32B, the sensor 33, and the display unit 35. Note that, FIG. 1 only excerpts and illustrates functional units related to the multi-biometric authentication service described above, and does not prevent a functional unit (not illustrated), for example, the reading unit or the like described above from being included in the store-side system 30.

Both of the first camera 31A and the second camera 32A are functional units that image the face image of the first modality. As an embodiment, the first camera 31A and the second camera 32A can be realized by an imaging device on which an imaging element such as a charge coupled device (CCD) or a complementary metal oxide semiconductor (CMOS) is mounted.

Here, the "imaged data" imaged by the first camera 31A is used in an aspect for ending narrowing based on the face information before the user visits the payment counter from the entrance of the store 3 after selection of products, movement, or the like. From such an aspect, the first camera 31A is installed in a state where a face of a person who enters the entrance of the store 3 can be imaged. The first camera 31A does not necessarily have to be a camera dedicated to the multi-biometric authentication service described above, and a surveillance camera used in another system, for example, a surveillance system can be shared with the multi-biometric authentication service described above.

Furthermore, the "imaged data" imaged by the second camera 32A is used in an aspect for specifying a narrowed list to be collated in the vein authentication of the second modality from among the plurality of narrowed lists. From such an aspect, the second camera 32A is installed in a state where a face of a person who uses the terminal 32 can be imaged. For example, the second camera 32A may be realized as an in-camera that is arranged to make a lens face in the same direction as a screen of the display unit 35.

The first extraction unit 31B and the second extraction unit 32B are functional units that extract the biometric information of the first modality. For example, in a case where the first modality is face information, the face information may be an image in which a face is imaged or a feature of a face extracted from the image of the face. Hereinafter, a case will be described where an embedded vector is used merely as an example of the face information. In this case, the first extraction unit 31B and the second extraction unit 32B can use a model that has trained an embedded space through deep learning or the like, for example, a convolutional neural network (CNN). For example, the first extraction unit 31B and the second extraction unit 32B detect a face in an image imaged for each output of the first camera 31A or the second camera 32A, for example, in frame units. Then, the first extraction unit 31B and the second extraction unit 32B input a partial image corresponding to a face region obtained through face detection, that is, a face image into the CNN that has trained the embedded space. With this, an embedded vector can be obtained from the CNN. Then, the first extraction unit 31B and the second extraction unit 32B encrypt the face information described above according to a predetermined encryption method, for example, an algorithm such as a public key encryption as the face information at the time of entry to the store or the face information at the time of payment and transmits the encrypted face information at the time of entry to the store or face information at the time of payment to the server device 10. Note that the embedded vector is merely an example of the face information, and another feature, for example, a scale-invariant feature transform (SIFT) or the like may be extracted.

The sensor 33 is a functional unit that detects the biometric information of the second modality. As an embodiment, the sensor 33 can be realized as a sensor unit that includes an illumination that emits infrared light, for example, near infrared light having a wavelength suitable for imaging a vascular pattern of veins existing in a palm and a camera that can capture the infrared light. For example, when the palm is placed at a predetermined imaging position, the illumination emits the infrared light to the palm. The camera activated in conjunction with the emission of the infrared light images infrared light reflected and returned from the inside of the palm. Through such imaging, the infrared light is absorbed by erythrocytes in the vein, and as a result, a palm vein image in which the vascular pattern of the palm veins appears is obtained as a biological image. Thereafter, the sensor 33 extracts a blood vessel portion from the palm vein image and thins the blood vessel portion, and extracts a feature such as coordinates of a branched point in the blood vessel, a length between the branched points, a branch angle of the branched point, or the like as palm vein information. Then, the sensor 33 encrypts the palm vein information according to a predetermined encryption method such as an algorithm, for example, a public key encryption as the input palm vein information, and then, transmits the encrypted input palm vein information to the server device 10.

The display unit 35 is a functional unit that displays various types of information. As merely an example, the display unit 35 can be realized by a liquid crystal display, an organic electro-luminescence (EL) display, or the like. Note that the display unit 35 may be realized as a touch panel by being integrated with an input unit (not illustrated).

Note that, some of processing executed by the sensor 33 as well as the first extraction unit 31B and the second extraction unit 32B, for example, a function such as extraction of a feature of a palm vein may be virtually realized by a hardware processor such as a central processing unit (CPU) or a micro processing unit (MPU). Here, the processor may be mounted on any device in the store-side system 30 described above. Merely as an example, a processor mounted on the terminal 32 connected to the first camera 31A, the second camera 32A, and the sensor 33 can be used. For example, the processor reads a feature extraction program for realizing the function such as the feature extraction described above, from a storage device (not illustrated), for example, a read only memory (ROM) or an auxiliary storage device. Then, the processor develops a process corresponding to the function described above on a memory such as a random access memory (RAM) by executing the feature extraction program described above. As a result, the above functions can be virtually realized as processes. While the CPU and the MPU are exemplified as an example of the processor here, the functional units described above may be realized by any processor regardless of a versatile type or a dedicated type. Additionally, the functions described above may also be realized by a hard wired logic such as an application specific integrated circuit (ASIC) or a field programmable gate array (FPGA).

### [Configuration of Server Device 10]

Next, an example of a functional configuration of the server device 10 according to the present embodiment will be described. As illustrated in FIG. 1, the server device 10 includes a communication interface unit 11, a storage unit 13, and a control unit 15. Note that, FIG. 1 only excerpts and illustrates the functional units related to the multi-biometric authentication service described above. It is not prevented that a functional unit other than those illustrated, for example, a functional unit that is included in an existing computer by default or as an option, for example, an input unit, a display unit, or the like from being included in the server device 10.

The communication interface unit 11 corresponds to an example of a communication control unit that controls communication with another device, for example, the store-side system 30.

Merely as an example, the communication interface unit 11 is realized by a network interface card such as a local area network (LAN) card. For example, the communication interface unit 11 receives the face information at the time of entry to the store from the first extraction unit 31B, receives the face information at the time of payment from the second extraction unit 32B, and receives the input palm vein information from the sensor 33. Furthermore, the communication interface unit 11 outputs a personal authentication retry request, an authentication result, a payment processing result, or the like to the display unit 35.

The storage unit 13 is a functional unit that stores data used for various programs such as an authentication program that realizes the multi-biometric authentication service described above, including an operating system (OS) executed by the control unit 15.

As an embodiment, the storage unit 13 may be realized by an auxiliary storage device. For example, a hard disk drive (HDD), an optical disc, a solid state drive (SSD), or the like correspond to the auxiliary storage device. Additionally, a flash memory such as an erasable programmable read only memory (EPROM) may correspond to the auxiliary storage device.

The storage unit 13 stores registered data 13A and narrowed list data L1 to Lm as an example of data used for a program executed by the control unit 15. In addition to these pieces of the registered data 13A and the narrowed list data L1 to Lm, the storage unit 13 can store various types of data such as the imaged data of the first camera 31A, the second camera 32A, or the like. Note that, because the narrowed list data L1 to Lm has an aspect of being dynamically generated from the imaged data of the first camera 31A and will be described later together with description of functional units for generating the narrowed list data L1 to Lm.

The registered data 13A is data on which predetermined registration processing, for example, user registration has been executed. For example, as the registered data 13A, data associated with registered face information and registered palm vein information for each piece of identification information of N users, for example, registered persons who have been registered as users can be adopted. As examples of the registered face information and the registered palm vein information, face information and palm vein information extracted from a face image and a vein image of imaged data imaged at the time of user registration are registered. Note that, in addition to the items described above, the registered data 13A may include attribute information of the user, for example, a name, an age, a gender, or the like.

The control unit 15 is a processing unit that controls the entire server device 10. As an embodiment, the control unit 15 is realized by a hardware processor such as a CPU or an MPU. While the CPU and the MPU are exemplified as an example of the processor here, it may be implemented by an optional processor regardless of whether it is a versatile type or a dedicated type. In addition, the control unit 15 may be realized by a hard wired logic such as an ASIC or a FPGA.

By developing the authentication program described above on a memory (not illustrated), for example, on a work area of a RAM, the control unit 15 virtually realizes the following processing units. As illustrated in FIG. 1, the control unit 15 includes a first specification unit 15A, a generation unit 15B, a second specification unit 15C, and an authentication unit 15D.

The first specification unit 15A is a processing unit that refers to the registered data 13A stored in the storage unit 13 and specifies registered biometric information of the second modality associated with the registered face information of which the similarity with the face information at the time of entry to the store satisfies a predetermined criterion. As an embodiment, the first specification unit 15A may be activated in a case of receiving the face information at the time of entry to the store from the first extraction unit 31B. For example, the first specification unit 15A calculates a similarity between the registered face information and the face information at the time of entry to the store extracted by the first extraction unit 31B, for each piece of the registered face information included in the registered data 13A. Merely as an example, in a case where an embedded vector is extracted as the face information, a hamming distance between the registered face information and the input face information can be used as the similarity. Then, the first specification unit 15A specifies the registered palm vein information associated with each piece of the registered face information having a predetermined number of higher similarities, for example, top K (< N) similarities with the face information at the time of entry to the store, among the registered palm vein information included in the registered data 13A. As a result, the registered palm vein information is narrowed from N pieces to K pieces.

Note that, here, as an example of the criteria described above, an example has been described in which the registered palm vein information associated with each piece of the registered face information having the predetermined number of higher similarities with the face information at the time of entry to the store is specified. However, the present invention is not limited to this. For example, registered palm vein information associated with each piece of registered face information of which the similarity with the face information at the time of entry to the store corresponds to the predetermined number of upper rates corresponding to a predetermined narrowing rate R_{Nd}, for example, one% of the number N of registered persons or the like.

The generation unit 15B is a processing unit that generates a narrowed list. As an embodiment, the generation unit 15B adds the face information at the time of entry to the store extracted by the first extraction unit 31B as a label and generates narrowed list data Lj in which the registered palm vein information group specified by the first specification unit 15A is listed. The narrowed list data Lj generated in this way is saved in the storage unit 13. The narrowed list data Lj saved in the storage unit 13 in this way can be deleted in a case where the narrowed list data Lj satisfies a predetermined condition. For example, it is possible to delete the narrowed list data Lj used for authentication or payment, to delete the narrowed list data Lj in a case where a certain period, for example, one hour has passed after being saved, or to delete the narrowed list data L1 to Lm at a regular time, for example, at a time when a store closes. Furthermore, the narrowed list data Lj does not necessarily need to be deleted, and data used for authentication or payment and unused data can be distinguished using a flag or the like.

The second specification unit 15C is a processing unit that specifies a registered biometric information group narrowed using any piece of the face information at the time of entry to the store, based on the similarity between the face information at the time of payment and the face information at the time of entry to the store. As an embodiment, the second specification unit 15C calculates a similarity between the face information at the time of entry to the store added as the label of the narrowed list data Lj and the face information at the time of payment extracted by the second extraction unit 32B, for each piece of the narrowed list data L1 to Lm stored in the storage unit 13. Then, from among the narrowed list data L1 to Lm, the second specification unit 15C specifies narrowed list data to which face information at the time of entry to the store of which a similarity with the face information at the time of payment exceeds a predetermined threshold is added as a label as a narrowed list to be collated in the vein authentication of the second modality. Note that, here, an example has been described in which the narrowed list data to which the face information at the time of entry to the store of which the similarity with the face information at the time of payment is the largest is added as a label is specified. However, the present invention is not limited to this. For example, among the narrowed list data L1 to Lm, narrowed list data to which the face information at the time of entry to the store of which the similarity with the face information at the time of payment is the largest is added as a label can be specified.

The authentication unit 15D is a processing unit that executes second modality authentication processing. As an embodiment, the authentication unit 15D calculates a similarity between the registered palm vein information group included in the narrowed list data specified by the second specification unit 15C and the input palm vein information detected by the sensor 33. As an example of such a similarity, cross-correlation obtained by performing pattern matching of the registered palm vein information and the input palm vein information can be used. At this time, in a case where there is a registered palm vein of which a similarity with an input palm vein is equal to or more than a predetermined threshold, the authentication unit 15D authenticates that the input palm vein is that of the registered person. On the other hand, in a case where there is no registered palm vein of which the similarity with the input palm vein is equal to or more than the predetermined threshold, the authentication unit 15D authenticates that the input palm vein is not that of the registered person. Then, the authentication unit 15D notifies the store-side system 30 of an authentication result, for example, authentication successful or authentication failed. The authentication result notified in this way may be output by the display unit 35 or the like.

Note that, here, an example has been described in which the server device 10 notifies the store-side system 30 of the authentication result. However, the present invention is not limited to this. For example, the server device 10 can execute payment processing of a product to be purchased using payment information associated with a user who is authenticated as the registered person, for example, a credit card, a debit card, electronic money, or the like and can notify the store-side system 30 of a payment processing result. In addition, the server device 10 can transfer the authentication result to an application that executes the payment processing inside or outside the server device 10.

### [Flow of Processing]

Next, a flow of processing of the server device 10 according to the present embodiment will be described. Hereinafter, after describing (1) first specification processing executed by the server device 10, (2) second specification processing will be described.

### (1) First specification processing

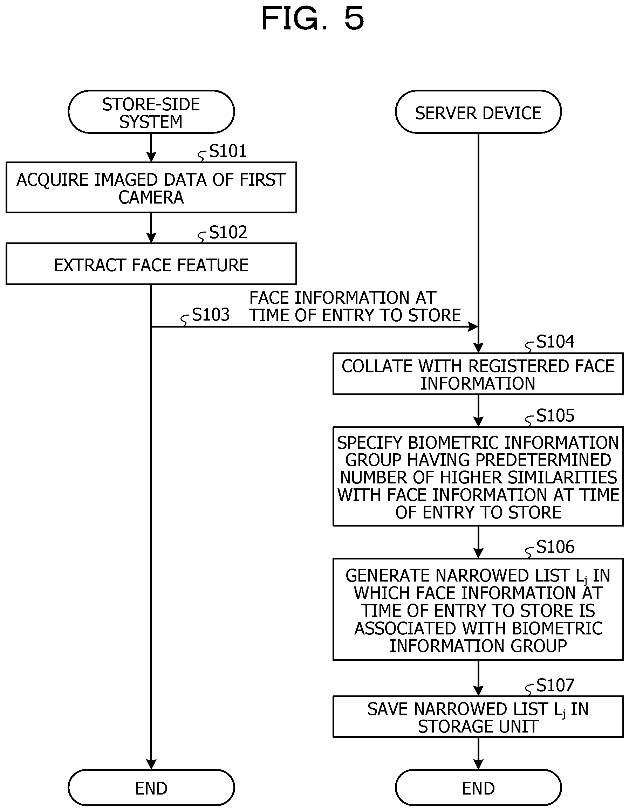

FIG. 5 is a diagram illustrating an example of a control sequence of the first specification processing according to the first embodiment. Merely as an example, this processing can be executed in units in which imaging is performed by the first camera 31A, for example, frame units.

As illustrated in FIG. 5, when imaged data of the first camera 31A is acquired (step S101), the first extraction unit 31B extracts a feature of a face from a face image included in the imaged data acquired in step S101 (step S102). Subsequently, the first extraction unit 31B notifies the server device 10 of the feature of the face extracted in step S102 as the face information at the time of entry to the store (step S103).

Subsequently, the first specification unit 15A collates the registered face information with the face information at the time of entry to the store notified in step S103, for each piece of the registered face information included in the registered data 13A (step S104). Then, the first specification unit 15A specifies registered palm vein information associated with each piece of the registered face information having a predetermined number of higher similarities, for example, top K (< N) similarities with the face information at the time of entry to the store, from among the registered palm vein information included in the registered data 13A (step S105).

Then, the generation unit 15B adds the face information at the time of entry to the store notified in step S103 as a label and generates narrowed list data Lj in which the registered palm vein information group specified in step S105 is listed (step S106). Thereafter, the generation unit 15B saves the narrowed list data Lj generated in step S106 in the storage unit 13 (step S107) and ends the processing.

### (2) Second specification processing

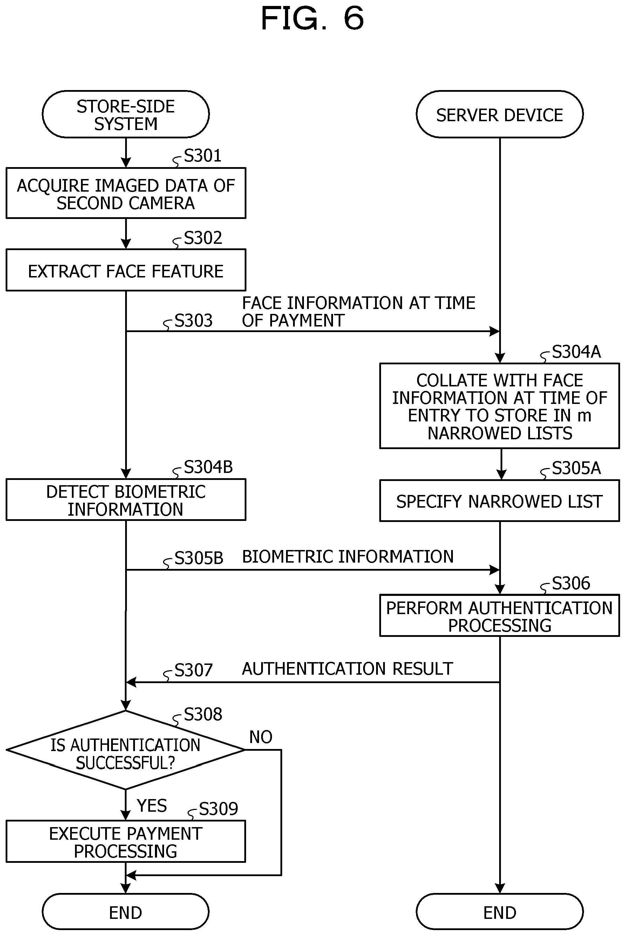

FIG. 6 is a diagram illustrating an example of a control sequence of the second specification processing according to the first embodiment. Merely as an example, this processing can be executed in units in which imaging by the second camera 32A is performed, for example, in frame units.

As illustrated in FIG. 6, when imaged data of the second camera 32A is acquired (step S301), the second extraction unit 32B extracts a feature of a face from a face image included in the imaged data acquired in step S301 (step S302). Subsequently, the second extraction unit 32B notifies the server device 10 of the feature of the face extracted in step S302 as the face information at the time of payment (step S303).

Hereinafter, after step S303 described above is executed, processing in step S304A and step S305A executed by the server device 10 and processing in step S304B and step S305B executed by the store-side system 30 are executed in parallel.

For example, in step S304A, the second specification unit 15C collates the face information at the time of entry to the store added as the label of the narrowed list data Lj with the face information at the time of payment notified in step S302, for each piece of the narrowed list data L1 to Lm stored in the storage unit 13.

Then, from among the narrowed list data L1 to Lm, the second specification unit 15C specifies narrowed list data to which face information at the time of entry to the store of which a similarity with the face information at the time of payment exceeds a predetermined threshold is added as a label as a narrowed list to be collated in the vein authentication of the second modality (step S305A).

On the other hand, the sensor 33 detects a feature of a palm vein from a palm vein image included in the imaged data of the sensor 33 in parallel to step S304A and step S305A (step S304B). Then, the sensor 33 notifies the server device 10 of the feature of the palm vein detected in step S304B as the input palm vein information (step S305B).

Thereafter, the authentication unit 15D executes authentication processing for authenticating whether or not the input palm vein information is that of the registered person based on the registered palm vein information group included in the narrowed list data specified in step S305A and the input palm vein information notified in step S305B (step S306). Then, the authentication unit 15D notifies the store-side system 30 of an authentication result in step S306 (step S307).

At this time, in a case where the authentication result notified in step S307 is authentication successful, that is, the input palm vein is authenticated as that of the registered person (Yes in step S308), the terminal 32 of the store-side system 30 executes the following processing. In other words, the terminal 32 executes payment processing of a product to be purchased using payment information associated with a user who has been authenticated as the registered person, for example, a credit card, a debit card, electronic money, or the like (step S309) and ends the processing.

Note that, in a case where the authentication result notified in step S307 is authentication failed, that is, it is authenticated that the input palm vein is not that of the registered person (No in step S308), the payment processing in step S309 is not executed, and the processing ends.

### [One Aspect of Effects]

As described above, the multi-biometric authentication service according to the present embodiment collates the registered palm vein information group narrowed using the face information at the time of entry to the store similar to the face information at the time of payment, of the registered palm vein information group narrowed for each piece of the face information at the time of entry to the store with the input palm vein information. Therefore, the multi-biometric authentication service according to the present embodiment can omit the collation with the biometric information group narrowed with the face information at the time of entry to the store that is not similar to the face information at the time of payment. Therefore, according to the multi-biometric authentication service according to the present embodiment, it is possible to reduce the authentication time.

### [Second Embodiment]

Incidentally, while the embodiment related to the disclosed apparatus has been described above, the present invention may be carried out in a variety of different modes in addition to the embodiment described above. Thus, hereinafter, another embodiment included in the present invention will be described.

### [Sort Using Required Time]

In the first embodiment described above, an example has been described in which the collation between the face information at the time of payment and the face information at the time of entry to the store of each narrowed list is performed in the order of the entry to the store 3, that is, order of imaging the face image used to extract the face information at the time of entry to the store. However, the order does not necessarily to be the order of the entry to the store 3.

For example, a server device 10 can store a required time after a face image of a user is imaged by a first camera 31A and before the face image is imaged by a second camera 32A, for each user, in association with each other. Merely as an example, the server device 10 can calculate a time difference between a time when narrowed list data is generated and a time when the narrowed list data is specified as a collation target for second modality biometric authentication using the face information at the time of payment as the required time described above. The required time calculated in this way can be stored in registered data 13A in association with identification information of the user. At this time, in a case where an initial value, for example, a value other than a NULL value has been already saved in the registered data 13A, it is sufficient that a statistical value of calculated or saved values, for example, an average or a median be an angle.

Under such management of the required time, in a case where new narrowed list data is generated, the server device 10 acquires a required time associated with registered face information of which a similarity with the face information at the time of entry to the store of the narrowed list is the largest from the registered data 13A, for each m pieces of narrowed list data L1 to Lm including a new narrowed list data Lj. Then, the server device 10 sorts the m pieces of narrowed list data L1 to Lm in an ascending order of the required time. Thereafter, the server device 10 saves the m pieces of narrowed list data L1 to Lm that have been sorted in the ascending order of the required time in the storage unit 13.

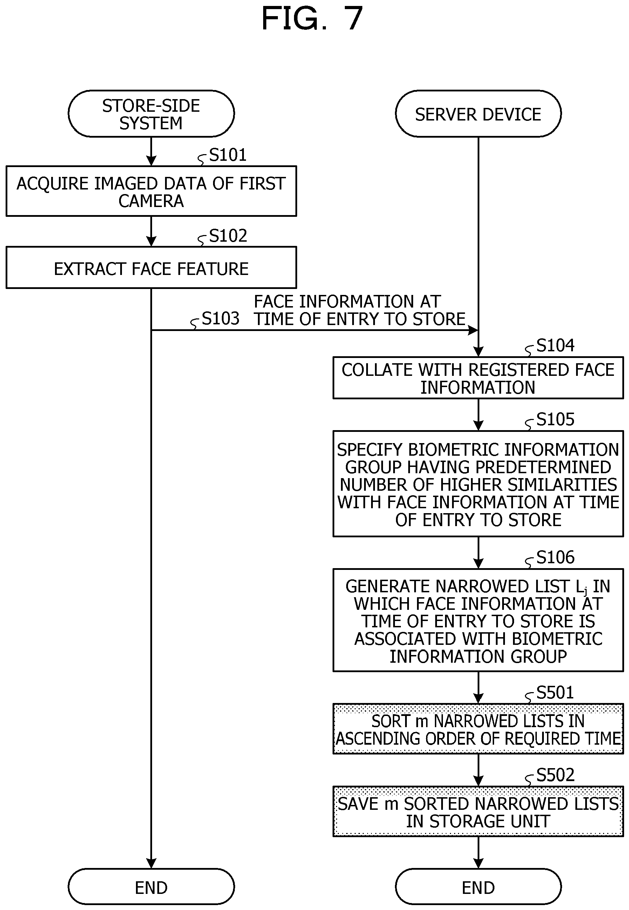

FIG. 7 is a diagram illustrating an example of a control sequence of first specification processing according to an application example. In FIG. 7, processing same as the processing illustrated in FIG. 5 is denoted with the same step number, and processing different from the processing illustrated in FIG. 5 is denoted with a new step number. Note that, here, description of the processing same as the processing illustrated in FIG. 5 is omitted, and difFerences will be excerpted and described.

In other words, after the new narrowed list data Lj is generated in step S106, a generation unit 15B acquires the required time associated with the registered face information of which the similarity with the face information at the time of entry to the store of the narrowed list is the largest for each m pieces of narrowed list data L1 to Lm including the new narrowed list data Lj from the registered data 13A and sorts the m pieces of narrowed list data L1 to Lm in the ascending order of the required time (step S501).

Then, the generation unit 15B saves the m pieces of narrowed list data L1 to Lm sorted in the ascending order of the required time in a storage unit 13 (step S502), and ends the processing.

By the processing in step S501 and step S502 illustrated in FIG. 7, the storage unit 13 stores the m pieces of narrowed list data L1 to Lm in order from the narrowed list data with the shortest required time. As a result, a second specification unit 15C can collate the face information at the time of payment with the face information at the time of entry to the store of each narrowed list in the ascending order of the required time in step S304A illustrated in FIG. 6.

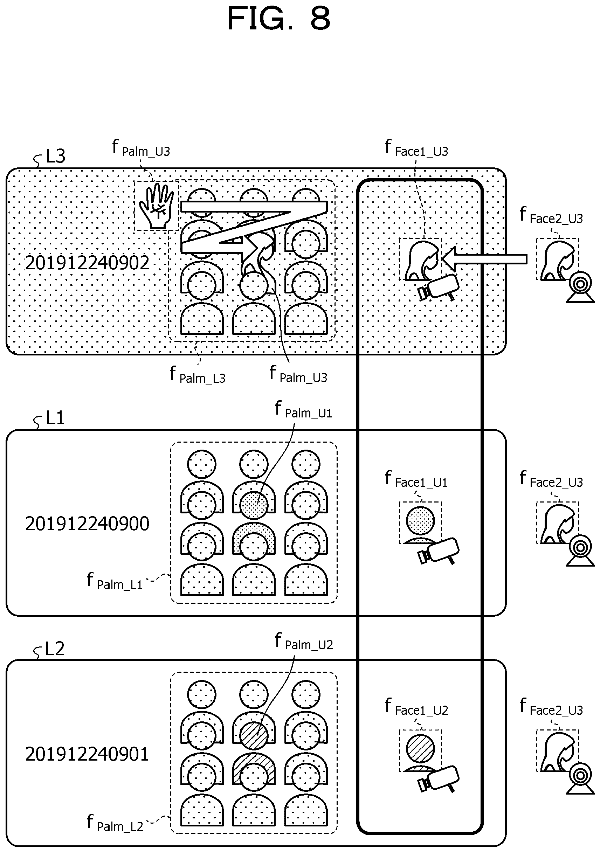

FIG. 8 is a diagram illustrating an example of sorted narrowed list data. FIG. 8 illustrates the narrowed list data L1 to 13 illustrated in FIG. 4 sorted in the ascending order of the required time. Merely as an example, FIG. 8 illustrates a case where a magnitude relationship of the required time is "narrowed list data L3 < narrowed list data L1 < narrowed list data L2".

As illustrated in FIG. 8, in the narrowed list data L1 to L3 sorted in the ascending order of the required time, face information at the time of payment f_{face2_U3} is collated with face information at the time of entry to the store f_{face1_U3} in the narrowed list data L3, face information at the time of entry to the store f_{face1_U1} in the narrowed list data L1, and face information at the time of entry to the store f_{face1_U2} in the narrowed list data L2 in this order. In this case, at the time of the collation between the face information at the time of payment f_{face2_U3} and the face information at the time of entry to the store f_{face1_U3}, a similarity between the face information at the time of payment f_{face2_U3} and the face information at the time of entry to the store f_{face1_U3} exceeds a threshold. Therefore, as compared with the example illustrated in FIG. 4, the collation of the face information at the time of payment f_{face2_U3} with the face information at the time of entry to the store f_{face1_U1} in the narrowed list data L1 and the face information at the time of entry to the store f_{face1_U2} in the narrowed list data L2 can be omitted.

As described above, by sorting the m pieces of narrowed list data L1 to Lm in the ascending order of the required time, a collation time of the face information at the time of payment with the face information at the time of entry to the store of each narrowed list can be reduced. Note that, here, an example has been described in which the sort is performed at the time of saving in the storage unit 13. However, sorting at the time of saving is not necessarily performed at the time of saving, and sorting can be performed at the time of referring in step S304A illustrated in FIG. 6.

### [Application to Standalone]

In the first embodiment described above, an example has been described in which the functions of the multi-biometric authentication service including the server device 10 and the store-side system 30 are operated by a client server system. However, the multi-biometric authentication service described above may be operated standalone.

### [Application Example of Modality]

In the first embodiment described above, an example has been described in which the second modality is a palm vein. However, each modality is not limited to a specific authentication site. For example, it is not prevented to apply another authentication site such as fingerprints or irises to the second modality.

### [Application Example of Use Case]

In the first embodiment described above, empty-handed settlement has been exemplified as an example of a use case of the multi-biometric authentication service described above. However, the multi-biometric authentication service described above can be applied to other use cases such as usage of automatic teller machines in financial institutions or entry and exit management.

### [Authentication Program]

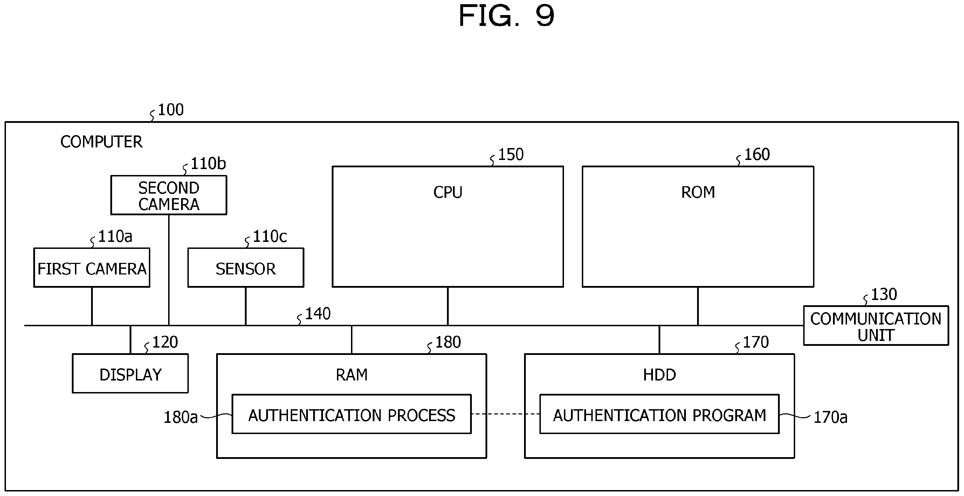

Furthermore, various types of processing described in the embodiments described above may be implemented by executing a program prepared in advance by a computer such as a personal computer or a workstation. Then, in the following, an example of a computer that executes the authentication program according to the first and second embodiments described above will be described with reference to FIG. 9.

FIG. 9 is a diagram illustrating a hardware configuration example of a computer. As illustrated in FIG. 9, a computer 100 includes a first camera 110a, a second camera 110b, a sensor 110c, a display 120, and a communication unit 130. Moreover, the computer 100 includes a CPU 150, a ROM 160, an HDD 170, and a RAM 180. These components 110 to 180 are each connected via a bus 140.

As illustrated in FIG. 9, the HDD 170 stores an authentication program 170a that achieves functions similar to the first specification unit 15A, the generation unit 15B, the second specification unit 15C, and the authentication unit 15D indicated in the first embodiment described above. This authentication program 170a may be integrated or separated similarly to each component of the first specification unit 15A, the generation unit 15B, the second specification unit 15C, and the authentication unit 15D illustrated in FIG. 1. In other words, all pieces of data indicated in the first embodiment described above do not necessarily have to be stored in the HDD 170, and it is sufficient that data for use in processing be stored in the HDD 170.

Under such an environment, the CPU 150 reads the authentication program 170a from the HDD 170, and develops the authentication program 170a in the RAM 180. As a result, the authentication program 170a functions as an authentication process 180a as illustrated in FIG. 9. The authentication process 180a develops various types of data read from the HDD 170 in a region allocated to the authentication process 180a in a storage region included in the RAM 180, and executes various types of processing by using the various types of developed data. For example, examples of the processing to be executed by the authentication process 180a include the processing illustrated in FIGs. 5 to 7 or the like. Note that all the processing units indicated in the first embodiment described above do not necessarily operate in the CPU 150, and it is sufficient that a processing unit corresponding to processing to be executed be virtually implemented.

Note that the authentication program 170a described above does not necessarily have to be stored in the HDD 170 or the ROM 160 from the beginning. For example, each program is stored in a "portable physical medium" such as a flexible disk, which is a so-called FD, CD-ROM, DVD disk, magneto-optical disk, or IC card to be inserted into the computer 100. Then, the computer 100 may acquire and execute each program from these portable physical media. Furthermore, each program may be stored in another computer, server device, or the like connected to the computer 100 via a public line, the Internet, a LAN, a WAN, or the like, and the computer 100 may acquire each program from them to execute the program.

### REFERENCE SIGNS LIST

1 authentication system
10 server device
11 communication interface unit
13 storage unit
13A registered data
L1 to Lm narrowed list data
15 control unit
15A first specification unit
15B generation unit
15C second specification unit
15D authentication unit
30 store-side system
31A first camera
31B first extraction unit
32 terminal
32A second camera
32B second extraction unit
33 sensor
35 display unit

## Claims

1. An authentication method executed by a computer, the authentication method comprising:
referring to a storage unit that stores biometric information of a person in association with feature information of a face image of the person when the first specification unit receives first imaged data and second imaged data imaged by a first camera and to specify a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria;
specifying one of the first biometric information group or the second biometric information group, based on a similarity between feature information of a third face image included in third imaged data and each of the feature information of the first face image and the feature information of the second face image, when the second specification unit receives the third imaged data imaged by a second camera; and
executing authentication processing according to a plurality of pieces of biometric information included in the specified biometric information group and the acquired biometric information when the authentication unit acquires biometric information detected by a sensor.

2. The authentication method according to claim 1, wherein the process further comprising
generating first list data in which a label of the feature information of the first face image is added to a list of the first biometric information group and second list data in which a label of the feature information of the second face image is added to a list of the second biometric information group,
wherein the specifying includes specifying a biometric information group included in list data to which a label is added, in which the label has a similarity that satisfies a criteria, among a similarity between the feature information of the third face image and the label of the first list data and a similarity between the feature information of the third face image and the label of the second list data.

3. The authentication method according to claim 2, wherein the specifying includes specifying a biometric information group included in list data to which a label is added, in which the label has a similarity that exceeds a threshold, among the similarity between the feature information of the third face image and the label of the first list data and the similarity between the feature information of the third face image and the label of the second list data.

4. The authentication method according to claim 2, wherein the specifying includes specifying a biometric information group included in list data to which a label is added, in which the label has a maximum similarity, among the similarity between the feature information of the third face image and the label of the first list data and the similarity between the feature information of the third face image and the label of the second list data.

5. The authentication method according to claim 2, wherein
the storage unit further stores a required time after the face image of the person is imaged by the first camera and before the face image is imaged by the second camera, and
the specifying includes collating the feature information of the third face image with each of the label of the first list data and the label of the second list data in an ascending order of the required time.

6. The authentication method according to claim 1, wherein the authentication processing is palm vein authentication processing.

7. An authentication program for a computer to execute a process comprising:
referring to a storage unit that stores biometric information of a person in association with feature information of a face image of the person when the first specification unit receives first imaged data and second imaged data imaged by a first camera and to specify a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria;
specifying one of the first biometric information group or the second biometric information group, based on a similarity between feature information of a third face image included in third imaged data and each of the feature information of the first face image and the feature information of the second face image, when the second specification unit receives the third imaged data imaged by a second camera; and
executing authentication processing according to a plurality of pieces of biometric information included in the specified biometric information group and the acquired biometric information when the authentication unit acquires biometric information detected by a sensor.

8. The authentication program according to claim 7, wherein the process further comprising
generating first list data in which a label of the feature information of the first face image is added to a list of the first biometric information group and second list data in which a label of the feature information of the second face image is added to a list of the second biometric information group,
wherein the specifying includes specifying a biometric information group included in list data to which a label is added, in which the label has a similarity that satisfies a criteria, among a similarity between the feature information of the third face image and the label of the first list data and a similarity between the feature information of the third face image and the label of the second list data.

9. The authentication program according to claim 8, wherein the specifying includes specifying a biometric information group included in list data to which a label is added, in which the label has a similarity that exceeds a threshold, among the similarity between the feature information of the third face image and the label of the first list data and the similarity between the feature information of the third face image and the label of the second list data.

10. The authentication program according to claim 8, wherein the specifying includes specifying a biometric information group included in list data to which a label is added, in which the label has a maximum similarity, among the similarity between the feature information of the third face image and the label of the first list data and the similarity between the feature information of the third face image and the label of the second list data.

11. The authentication program according to claim 8, wherein
the storage unit further stores a required time after the face image of the person is imaged by the first camera and before the face image is imaged by the second camera, and
the specifying includes collating the feature information of the third face image with each of the label of the first list data and the label of the second list data in an ascending order of the required time.

12. The authentication program according to claim 7, wherein the authentication processing is palm vein authentication processing.

13. An authentication device comprising:
a first specification unit configured to refer to a storage unit that stores biometric information of a person in association with feature information of a face image of the person when the first specification unit receives first imaged data and second imaged data imaged by a first camera and to specify a first biometric information group that includes a plurality of pieces of biometric information associated with feature information of which a similarity with feature information of a first face image included in the first imaged data satisfies a criteria and a second biometric information group that includes a plurality of pieces of biometric information associated with feature information of which a similarity with feature information of a second face image included in the second imaged data satisfies a criteria;
a second specification unit configured to specify one of the first biometric information group or the second biometric information group, based on a similarity between feature information of a third face image included in third imaged data and each of the feature information of the first face image and the feature information of the second face image, when the second specification unit receives the third imaged data imaged by a second camera; and
an authentication unit configured to execute authentication processing according to a plurality of pieces of biometric information included in the specified biometric information group and the acquired biometric information when the authentication unit acquires biometric information detected by a sensor.

14. The authentication device according to claim 13, further comprising
a generation unit configured to generate first list data in which a label of the feature information of the first face image is added to a list of the first biometric information group and second list data in which a label of the feature information of the second face image is added to a list of the second biometric information group, wherein
the second specification unit specifies a biometric information group included in list data to which a label is added, in which the label has a similarity that satisfies a criteria, among a similarity between the feature information of the third face image and the label of the first list data and a similarity between the feature information of the third face image and the label of the second list data.

15. The authentication device according to claim 14, wherein the second specification unit specifies a biometric information group included in list data to which a label is added, in which the label has a similarity that exceeds a threshold, among the similarity between the feature information of the third face image and the label of the first list data and the similarity between the feature information of the third face image and the label of the second list data.

16. The authentication device according to claim 14, wherein the second specification unit specifies a biometric information group included in list data to which a label is added, in which the label has a maximum similarity, among the similarity between the feature information of the third face image and the label of the first list data and the similarity between the feature information of the third face image and the label of the second list data.

17. The authentication device according to claim 14, wherein
the storage unit further stores a required time after the face image of the person is imaged by the first camera and before the face image is imaged by the second camera, and
the second specification unit includes processing of collating the feature information of the third face image with each of the label of the first list data and the label of the second list data in an ascending order of the required time.

18. The authentication device according to claim 13, wherein the authentication processing is palm vein authentication processing.
